# EUROPEAN PATENT SPECIFICATION

(11) **EP 4 361 556 B1**
(45) Date of publication and mention of the grant of the patent: **08.10.2025**
(21) Application number: 23382517.3
(22) Date of filing: 31.05.2023
(51) Int. Cl.: G01B 11/06, B29C 70/54, C08J 5/24, G01N 21/84, G01B 5/06

(54) **DEVICE AND METHOD FOR MEASURING THE FIBRE CONTENT OF A SHEET OF PREPREG MATERIAL**
VORRICHTUNG UND VERFAHREN ZUR MESSUNG DES FASERGEHALTS EINER FOLIE AUS PREPREG-MATERIAL
DISPOSITIF ET PROCÉDÉ DE MESURE DE LA TENEUR EN FIBRES D'UNE FEUILLE DE MATÉRIAU PRÉIMPRÉGNÉ

(30) Priority: 28.10.2022 ES 202230935
(43) Date of publication of application: 01.05.2024
(73) Proprietor: Ideko, S.Coop., 20870 Elgoibar Guipuzcoa (ES)
(72) Inventor: VALLEJO RASERO, FRANCISCO JAVIER, 20870 ELGOIBAR (GUIPUZCOA) (ES); DE LA IGLESIA UGARTEMENDIA, IÑIGO, 20870 ELGOIBAR (GUIPUZCOA) (ES); GOENAGA GOICOECHEA, GARAZI, 20870 ELGOIBAR (GUIPUZCOA) (ES); GUTIERREZ PEREZ DE EULATE, NATALIA, 20870 ELGOIBAR (GUIPUZCOA) (ES); GONDRA ZUBIETA, JOSEBA KOLDO, 48170 ZAMUDIO (BIZKAIA) (ES)
(74) Representative: Plasseraud IP

(56) References cited:
- CN-A- 110 712 383
- JP-A- 2011 174 835
- KR-B1- 102 424 290

## Description

### Technical field

The object of the present invention is a device and a method for measuring the fibre content (typically glass fibre) of a sheet of prepreg material.

The device and method for measuring the fibre content of a sheet of prepreg material that is the object of the present invention allows the fibre content (in percent by weight) of the sheet of prepreg material to be measured during the manufacturing process thereof, continuously performing the measurement during the manufacture of the prepreg sheet and achieving high measurement speeds.

The device and method for measuring the fibre content of a sheet of prepreg material object of the present invention is applicable in the manufacture of composite materials (composites) for structural and/or insulation applications in a wide variety of industries such as the aeronautical, naval or automobile industry, among others.

### State of the art

According to a method of manufacturing composite materials (or "composites"), starting from a sheet of dry fibre, for example, carbon or glass fibre, which is immersed or impregnated in a resin matrix. The material obtained after impregnating with resin is also called "preimpregnation" (or "prepreg"). For its manufacture, the dry fibres take the form of a fabric and the matrix is used to join them together in an impregnation process. Subsequently, the matrix is partially cured using ultraviolet (UV) radiation, leaving the prepreg material ready.

The quantity or percentage by weight of fibre in the composite material affects the mechanical characteristics of rigidity, hardness and mechanical strength. For this reason, in the prepreg manufacturing process, it is vitally important to know the amount or percentage by weight of fibre present in the manufactured sheet of material, in order to determine its specifications.

To determine the percentage of fibre present in a prepreg, it is common to resort to weighing a portion of the surface of the manufactured composite material and compare it with the same surface area of the glass fibre sheet. By means of this comparison, the percentage by weight of fibre that the composite material contains can be calculated in a simple manner. To do so, destructive methodologies are used to separate the fibre from the matrix, for example, in the case of prepregs with glass fibre, a burn in a muffle is carried out at 600°C in which the polymer matrix is volatilised, leaving the glass fibres loose. For prepregs with carbon fibre, since the carbon fibre is sensitive to the presence of oxygen, it is not possible to use the muffle combustion method, and the method used is the dissolution of the matrix with strong acids, leaving the carbon fibres loose for weighing.

In addition to being destructive methods, the previously mentioned procedures are subject to a certain degree of uncertainty, due to the precision of the weight measurement instruments and the variations in fibre and resin content throughout a prepreg sheet. Additionally, these are discretionary measurement processes, wherein the production of composite material is stopped at certain times in order to weigh a discrete sample of manufactured material, also assuming that the content of the prepreg sheet is homogeneous.

An example of a device for continuously measuring a thickness of a continuous running sheet is described in JP 2011-174835 A. An example of a method for predicting physical properties of a fiber-resin composite is described in KR 102424290 B1. An example of a device for preparing carbon fiber thermoplastic dipping strips by water base powder dipping is described in CN 110712383 A.

### Object of the invention

In order to solve the aforementioned drawbacks, the present invention relates to a device and a method for measuring the fibre content of a sheet of prepreg material as defined in the appended claims.

The sheet of prepeg material is made up of a fibre sheet (for example, glass fibre) impregnated in a resin matrix.

The method of measuring the fibre content of a sheet of prepreg material, object of the present invention, comprises:
- measuring the thickness of a sheet of prepreg material;
- correlating the measurement of the thickness of the sheet of prepreg material with a database comprising values of fibre content as a function of the thickness or range of thicknesses of the sheet and as a function of the materials that make up the sheet, and;
- determining the fibre content of the sheet of prepreg material as that value from the database corresponding to a sheet made up of the same materials as the sheet the thickness of which has been measured, and with a thickness or range of thicknesses comprising the measured thickness of the sheet.

Due to the method described above, the fibre content of the sheet of prepreg material can be determined indirectly (by measuring the thickness of the sheet).

Likewise, thanks to this indirect determination of the fibre content, a continuous control of the fibre content of a sheet that is travelling mounted on a mobile platform or conveyor belt can be carried out.

In other words, it is not necessary to stop the production or curing process of the sheet of prepreg material in order to proceed with the weighing and determination of the fibre content since this measurement of the fibre content is carried out by measuring the thickness of the sheet, which can be performed without stopping the transport process of the sheet on the mobile platform, also being a non-destructive measurement method as in the known solutions.

The aforementioned database can be obtained, for each selection of a particular fibre material and a particular resin, by means of the following steps:
- measuring a weight corresponding to a first surface of non-preimpregnated fibre material;
- obtaining a plurality of sheets of prepreg material, each sheet comprising a certain amount of resin;
- measuring a weight corresponding to said first surface of sheet of material preimpregnated with a certain amount of resin;
- obtaining the fibre content of the sheets of prepreg material, by means of the difference in weight between the non-preimpregnated fibre material and the sheet of prepreg material;
- measuring the thickness of each sheet of prepreg material with each certain amount of resin, and;
- calculating the mean and deviation of the measured sheet thickness data, and link the thickness of the sheets of prepreg material to the fibre content thereof.

Regarding the measurement of the thickness of the sheet of prepreg material, said sheet being transparent to laser light, such as glass fibre sheets, the measurement comprises:
- measuring a first distance existing between a laser module and a reflection plate resting on a platform;
- arranging the sheet of prepreg material between the reflection plate and the platform;
- measuring at least a second distance between the laser module and the reflection plate, wherein the reflection plate rests on the platform with the sheet therebetween, and;
- determining the thickness of the sheet as the difference between the first measured distance and that of at least one second measured distance.

It is envisaged that the measurement can be carried out continuously, the reflection plate adapting to the height of the sheet in the movement thereof.

According to one embodiment of the invention, it is envisaged that the measurement method comprises measuring the thickness of the sheet of non-impregnated fibre prior to measuring the thickness of the sheet of prepreg material. In this way it is possible to determine the thickness of the fibre sheet for the input of parameters to obtain the correlation between thickness and amount of fibre with the database.

As already mentioned, the present invention also relates to a device for measuring the fibre content of a sheet of prepreg material.

The device for measuring the fibre content of a sheet of prepreg material, object of the present invention, comprises:
- a base comprising a reflection plate and a frame configured to fasten the base to a fixed point, wherein the base comprises height adjustment means in order for the base to rest on a sheet of prepreg material arranged on the mobile platform, and;
- a laser module configured to measure a distance between said laser module and the reflection plate.

Preferably, the height adaptation means are at least one roller connected to the base to rest on the mobile platform and/or on the sheet of prepreg material. This roller enables an adaptation to the height of the sheet in the continuous movement thereof.

According to the invention, it is envisaged that the device comprises continuous feeding means for continuously feeding a sheet of prepreg material, such as a conveyor belt that feeds a sheet of prepreg material from a reel.

According to another aspect of the invention, the device can comprise a reel for feeding a fibre sheet prior to the application of resin (non-preimpregnated sheet), for the formation of prepreg material, comprising an additional laser module for measuring the thickness of the fibre sheet. In this way, according to an exemplary embodiment, during the manufacture of the sheet of prepreg material, the fibre is measured, determining its thickness and later resin is applied to it, forming the sheet of prepreg material, measuring its thickness at said time, such that taking into account the thickness of the measured fibre sheet, it is taken as input data for determining the type of fibre to obtain, according to the database, the correlation of thickness and amount of fibre.

According to another feature of the invention, the measuring device comprises collection means for collecting the sheet of prepreg material in the form of a reel.

The laser module is preferably arranged vertically on the reflection plate.

### Description of the figures

As part of the explanation of at least one embodiment of the invention, the following figures have been included.
Figure 1 shows a schematic side view of a possible embodiment of the device for measuring the fibre content of a sheet of prepreg material.
Figure 2 shows a diagram with the graphs that correlate the thickness of the prepreg sheet with its fibre content (in percent by weight), for four different types of fabric. Those represented with triangles being material PP_MAT225, the diamonds being material PP_MAT300, the squares being material PP_MAT450, and the circles being PP_COMBI500.
Figure 3 shows a schematic view of an alternative embodiment of the device for measuring fibre content with continuous measurement during the manufacture of the sheet of prepreg material.

### Detailed description of the invention

The present invention relates, as previously mentioned, to a device and method for measuring the fibre content of a sheet (4) of prepreg material.

According to a preferred embodiment, the device comprises a base (1) that can be attached by means of a frame (2) to a fixed part, keeping the base (1) in a fixed position.

The device is configured to continuously feed the sheet (4) of prepreg material, preferably by means of a conveyor belt or mobile platform (5).

The base (1) comprises rollers (6) configured to be arranged on the sheet (4) of prepreg material while it moves on the platform (5).

The sheet (4) moves by being dragged by the mobile platform (5), making the rollers (6) of the base (1) rotate with its linear movement.

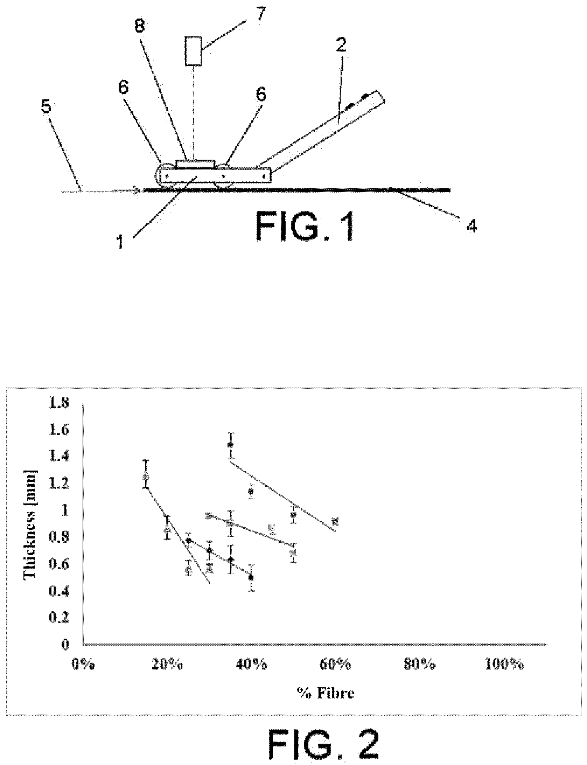

Figure 1 shows a schematic side view of a practical example of the device of the invention where it can be seen that the sheet (4) of prepreg material travels on the mobile platform (5), below the base (1).

The device comprises a laser light source, laser module (7) or laser range finder, configured to emit a laser light beam towards a reflection plate (8) mounted on the base (1).

The laser module (7) is located on the vertical of the reflection plate (8).

The laser module (7) makes it possible to measure the distance at which the reflection plate (8) is located.

The device is configured to measure the distance at which the reflection plate (8) is located from the laser module (7), when the base (1) rests with its rollers (6) directly on the mobile platform (5), and when the base (1) rests with its rollers (6) on the sheet (4) that travels dragged by the mobile platform (5).

Thus, by means of the difference in distance when the base (1) rests with its rollers (6) directly on the platform (5), and when the base (1) rests with its rollers (6) on the sheet (4), the thickness of the sheet (4) can be inferred.

Therefore, the present device makes it possible to quickly measure at any time, the local thickness of the sheet (4) of prepreg material that is transported on the mobile platform (5), this device being especially indicated for sheets (4) with a material that is transparent to the laser such as glass fibre, since otherwise the laser would not be able to measure the thickness of the glass fibre as it is transparent to the laser light beam.

The device comprises a central processing unit (not shown in the Figures) by means of which the device can calculate the fibre content of the sheet (4) based on the measured thickness of the sheet (4) of prepreg material.

To do so, by means of experimental data, the relationship between the thickness and the fibre content of the sheet (4) of prepreg material has been obtained.

The relationship between the thickness and fibre content varies depending on the fabric with which the prepreg is made. In the experiments carried out for the validation of the present invention, three glass fibre fabrics ("MAT") with surface densities of 225, 300 and 450 g/m2, respectively, and a combined glass fibre fabric ("woven/MAT") of 500 g/m2, referred to as MAT225, MAT300, MAT450 and COMBI500, respectively, were used.

The reinforcing fabric/fibre of the sheets (4) of prepreg material is glass fibre, and the resin used is an acrylic polyester.

Figure 2 shows the graphs obtained from the correlation of fibre (in % by weight) and the thickness of the sheet (4) of prepreg material, for each one of the mentioned fabrics.

The procedure followed to obtain the graphs in Figure 2 was as follows:
- Sheets (4) of prepreg material have been manufactured with four different amounts of resin for each of the four glass fibre fabrics used.
- In order to obtain the fibre content of the sheets (4) of prepreg material, the difference in weight between the dry fabrics and the fabrics preimpregnated with the resin has been measured. For example, every 0.5 m, three 100x100mm samples are taken from the width of the sheet (4) and they are weighed to find out the fibre content thereof.
- The thickness measurement of the sheets (4) of prepreg material has been carried out for 3 m. The acquisition of thickness data has been carried out at a frequency of 10 Hz (although the laser allows a much higher maximum frequency, typically of the order of 1 kHz).
- The mean and deviation of the measured thickness data have been calculated, allowing the thickness of the sheets (4) of prepreg material to be linked to the fibre content thereof.

The equations that link the fibre content to the thickness for each fabric studied are listed below, where 'y=Thickness [mm]' and 'x=% Fibre':
- **Fabric "MAT225":** a linear relationship is observed between the fibre content (% by weight) and the thickness of the sheet (4) of prepreg material, when the fibre content is between 15-30% and the thickness between 0.6-1.3 mm.
   The equation corresponding to the straight line is y = -4.8128x + 1.9031.
   As of 30% fibre, the thickness of the sheet (4) of prepreg material is equal to that of the non-impregnated fabric (sheet (4) with 100% fibre). The sheets (4) of prepreg material with MAT225 fibre reinforcement and a fibre content of less than 15% are not manufacturable.
- **Fabric "MAT300":** a linear relationship is observed between the fibre content (% by weight) and the thickness of the sheet (4) of prepreg material, when the fibre content is between 25-40% and the thickness between 0.5-0.8 mm.
   The equation corresponding to the straight line is y = -1.7978x + 1.2379.
   As of 40% fibre, the thickness of the sheet (4) of prepreg material is equal to that of the non-impregnated fabric (sheet (4) with 100% fibre). The sheets (4) of prepreg material with a MAT300 fibre reinforcement and a fibre content of less than 25% are not manufacturable.
- **Fabric "MAT450":** a linear relationship is observed between the fibre content (% by weight) and the thickness of the sheet (4) of prepreg material, when the fibre content is between 30-50% and the thickness between 0.7-1 mm.
   The equation corresponding to the straight line is y = -1.1552x + 1.3116.
   As of 50% fibre, the thickness of the sheet (4) of prepreg material is equal to that of the non-impregnated fabric (sheet (4) with 100% fibre). The sheets (4) of prepreg material with a MAT450 fibre reinforcement and a fibre content of less than 30% are not manufacturable.
- **Fabric "COMBI500":** a linear relationship is observed between the fibre content (% by weight) and the thickness of the sheet (4) of prepreg material, when the fibre content is between 35-60% and the thickness between 0.9-1.5 mm.
   The equation corresponding to the line is y = -2.0558x + 2.076.
   As of 60% fibre, the thickness of the sheet (4) of prepreg material is equal to that of the non-impregnated fabric (sheet (4) with 100% fibre). The sheets (4) of prepreg material with a COMBI500 fibre reinforcement and a fibre content of less than 35% are not manufacturable.

As shown in Figure 2, the trend in each of the fabrics studied is the same. The thickness decreases with the increase in fibre content until, from a certain value, the thickness of the sheet (4) of prepreg material is equal to that of the non-impregnated fabric, that is, equal to the thickness of one sheet (4) that has 100% fibre.

Based on said value, the device object of the present invention is not capable of differentiating between different fibre contents, since the thickness remains constant.

According to a possible embodiment of the invention, the range of thicknesses measured by the device of the invention is 0-7mm; however, for each type of fabric/fibre, when the thickness value of the sheet (4) of prepreg material is equal to the thickness that the non-impregnated sheet (4) would have, the fibre content of said sheet (4) of prepreg material cannot be known by means of the present device and method.

In the case of the analysed fabrics/fibres, the ranges are as follows:

| Fabric | Range % fibre | Thickness range (mm) |
|---|---|---|
| MAT225 | 15-30 | 1.3-0.6 |
| MAT300 | 25-40 | 0.8-0.5 |
| MAT450 | 30-50 | 1-0.7 |
| COMBI500 | 35-60 | 1.5-0.9 |

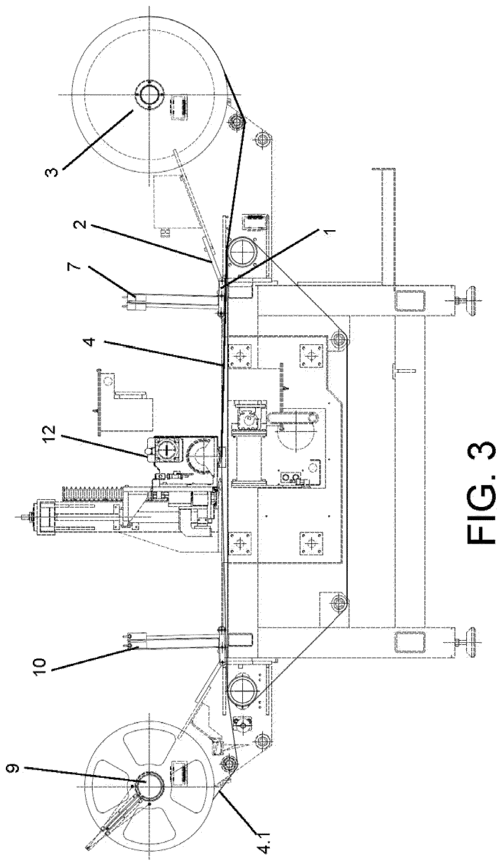

According to an alternative practical embodiment of the invention, as represented in figure 3. Starting from a coil (9) of glass fibre sheet (4.1), a laser module (10) is arranged, which, according to the measurement procedure described for figure 1, measures the thickness of the glass fibre sheet (4.1). This measurement serves as identification of the thickness and type of glass fibre (4.1) that will be used to carry out the subsequent correlation between thickness and amount of glass fibre. Subsequently, the glass fibre sheet (4.1) passes through a module for applying resin to the fibre sheet (4.1), in turn performing a pre-curing to obtain the sheet (4) of prepreg material.

Said sheet (4) of prepreg material moves continuously, passing through another laser module (7) that measures the thickness of the sheet (4) of prepreg material and taking into account said measurement, the central processing unit calculates the fibre content of the sheet (4) based on the measured thickness taking into account the correlation obtained represented in Figure 2.

This sheet (4) of prepreg material will subsequently be rolled onto a reel (3) for storage.

Therefore, with the present invention, the thickness of the prepregs will be controlled during the manufacture thereof, which will enable the process variables that determine the amount of resin impregnated in the fabrics to be controlled. In this way, prepregs with the optimum amount of resin will be obtained at all times.

## Claims

1. A method of measuring the fibre content of a sheet (4) of prepreg material, wherein the sheet (4) of prepreg material is formed by a fibre sheet (4.1) impregnated in a resin matrix and the sheet (4) of prepreg material is transparent to a laser light emitted from a laser module (7),
the method comprising:
- measuring a thickness of the sheet (4) of prepreg material;
- correlating the measurement of the thickness of the sheet (4) of prepreg material with a database comprising values of fibre content as a function of the thickness or range of thicknesses of the sheet (4) of prepreg material and as a function of the materials that make up the sheet (4) of prepreg material, and;
- determining the fibre content of the sheet (4) of prepreg material as that value from the database corresponding to a sheet (4) made up of the same materials as the sheet (4) of prepreg material the thickness of which has been measured, and with a thickness or range of thicknesses comprising the measured thickness of the sheet (4) of prepreg material;
wherein the measurement of the thickness of the sheet (4) comprises:
- measuring a first distance existing between the laser module (7) and a reflection plate (8) resting on a platform (5);
- arranging the sheet (4) of prepreg material between the reflection plate (8) and the platform (5);
- measuring at least a second distance between the laser module (7) and the reflection plate (8), wherein the reflection plate (8) rests on the sheet (4) of prepreg material arranged on the platform (5); and
- determining the thickness of the sheet (4) of prepreg material as the difference between the measured first distance and at least one of the measured second distance.

2. The method of measuring the fibre content of the sheet (4) of prepreg material according to claim 1, wherein the database is obtained, for each selection of a particular fibre sheet material (4.1) and a particular resin, by means of the following steps:
- measuring a weight corresponding to a first surface of non-preimpregnated fibre sheet material (4.1);
- obtaining a plurality of sheets (4) of prepreg material, each sheet (4) of prepreg material corresponding to said first surface of non-preimpregnated fibre sheet material (4.1) preimpregnated with a certain amount of resin;
- measuring a weight of each of the plurality of sheets (4) of prepreg material;
- obtaining the fibre content of each of the plurality of sheets (4) of prepreg material, by means of the difference in weight between the non-preimpregnated fibre sheet material (4.1) and the respective sheet (4) of prepreg material;
- measuring the thickness of each of the plurality of sheets (4) of prepreg material, and;
- calculating for each of the plurality of sheets (4) of prepreg material the mean and deviation of the measured thickness data, and link the thickness of the sheets (4) of prepreg material to the fibre content thereof.

3. The method for measuring the fibre content of a sheet (4) of prepreg material according to any one of the preceding claims, comprising measuring the thickness of the fibre sheet (4.1) prior to measuring the thickness of the sheet (4) of prepreg material to determine the type of fabric to be correlated in the database.

4. A device for measuring the fibre content of a sheet (4) of prepreg material comprising:
- a base (1) comprising a reflection plate (8) mounted on the base (1) and a frame (2) configured to fasten the base (1) to a fixed point, wherein the base (1) comprises height adjustment means (6) in order for the base (1) to rest directly on a mobile platform (5) or on the sheet (4) of prepreg material arranged on the mobile platform (5), and;
- a laser module (7) configured to measure a distance between said laser module (7) and the reflection plate (8);
**characterized in that** the device comprises a central processing unit configured to perform the processing steps of the measurement method according to any one of the preceding claims.

5. The device for measuring the fibre content of the sheet (4) of prepreg material according to claim 4, wherein the height adjustment means (6) are at least one roller (6) connected to the base (1).

6. The device for measuring the fibre content of the sheet (4) of prepreg material according to claim 4 or 5, wherein the device comprises continuous feeding means for continuously feeding the sheet (4) of prepreg material.

7. The device for measuring the fibre content of the sheet (4) of prepreg material according to the preceding claim, comprising a reel (9) for feeding a fibre sheet (4.1) prior to the application of resin for the formation of the sheet (4) of prepreg material, comprising an additional laser module (10) to measure the thickness of the fibre sheet (4.1) to determine the type of fabric to be correlated in the database.

8. The device for measuring the fibre content of the sheet (4) of prepreg material according to the preceding claim, comprising collection means in the form of a reel (3) for storage of the sheet (4) of prepreg material.

9. The device for measuring the fibre content of the sheet (4) of prepreg material according to any of claims 4 to 6, wherein the laser module (7) and/or the additional laser module (10) is arranged on the vertical of the reflection plate (8).

## Patentansprüche

1. Verfahren zur Messung des Fasergehalts einer Folie (4) aus Prepreg-Material, wobei die Folie (4) aus Prepreg-Material durch eine in eine Harzmatrix imprägnierte Faserschicht (4.1) ausgebildet wird und die Folie (4) aus Prepreg-Material für ein von einem Lasermodul (7) emittiertes Laserlicht transparent ist, wobei das Verfahren aufweist:
- Messen einer Dicke der Folie (4) aus Prepreg-Material;
- Korrelieren der Messung der Dicke der Folie (4) aus Prepreg-Material mit einer Datenbank, die Werte des Fasergehalts als eine Funktion der Dicke oder eines Bereichs von Dicken der Folie (4) aus Prepreg-Material und als eine Funktion der Materialien, welche die Folie (4) aus Prepreg-Material ausmachen, aufweist, und
- Bestimmen des Fasergehalts der Folie (4) aus Prepreg-Material als den Wert aus der Datenbank, der einer Folie (4) entspricht, die aus den gleichen Materialien wie die Folie (4) aus Prepreg-Material, deren Dicke gemessen wurde, besteht, und mit einer Dicke oder einem Dickenbereich, der die gemessene Dicke der Folie (4) aus Prepreg-Material aufweist;
wobei die Messung der Dicke der Folie (4) aufweist:
- Messen eines ersten Abstands, der zwischen dem Lasermodul (7) und einer Reflexionsplatte (8), die auf einer Plattform (5) auflagert, besteht;
- Anordnen der Folie (4) aus Prepreg-Material zwischen der Reflexionsplatte (8) und der Plattform (5);
- Messen wenigstens eines zweiten Abstands zwischen dem Lasermodul (7) und der Reflexionsplatte (8), wobei die Reflexionsplatte (8) auf der Folie (4) aus Prepreg-Material, die auf der Plattform (5) angeordnet ist, auflagert; und
- Bestimmen der Dicke der Folie (4) aus Prepreg-Material als die Differenz zwischen dem gemessenen ersten Abstand und wenigstens einem gemessenen zweiten Abstand.

2. Verfahren zur Messung des Fasergehalts der Folie (4) aus Prepreg-Material nach Anspruch 1, wobei die Datenbank für jede Auswahl eines bestimmten Faserfolienmaterials (4.1) und eines bestimmten Harzes mit Hilfe der folgenden Schritte gewonnen wird:
- Messen eines Gewichts, das einer ersten Oberfläche von nicht vorimprägniertem Faserfolienmaterial (4.1) entspricht;
- Erhalten mehrerer Folien (4) aus Prepreg-Material, wobei jede Folie (4) aus Prepreg-Material der ersten Oberfläche von nicht vorimprägniertem Faserfolienmaterial (4.1), das mit einer gewissen Menge an Harz vorimprägniert wurde, entspricht;
- Messen eines Gewichts jeder der mehreren Folien (4) aus Prepreg-Material;
- Erhalten des Fasergehalts jeder der mehreren Folien (4) aus Prepreg-Material mit Hilfe der Gewichtsdifferenz zwischen dem nicht vorimprägnierten Faserfolienmaterial (4.1) und der jeweiligen Folie (4) aus Prepreg-Material;
- Messen der Dicke jeder der mehreren Folien (4) aus Prepreg-Material, und
- Berechnen des Mittels und der Abweichung der gemessenen Dickedaten für jede der mehreren Folien (4) aus Prepreg-Material und Verknüpfen der Dicke der Folien (4) aus Prepreg-Material mit deren Fasergehalt.

3. Verfahren zur Messung des Fasergehalts einer Folie (4) aus Prepreg-Material nach einem der vorhergehenden Ansprüche, welches das Messen der Dicke der Faserfolie (4.1) vor dem Messen der Dicke der Folie (4) aus Prepreg-Material aufweist, um die Art des Gewebes, das in der Datenbank korreliert werden soll, zu bestimmen.

4. Vorrichtung zur Messung des Fasergehalts einer Folie (4) aus Prepreg-Material, die aufweist:
- einen Sockel (1), der eine auf dem Sockel (1) montierte Reflexionsplatte (8) und einen Rahmen (2), der konfiguriert ist, um den Sockel (1) an einem festen Punkt zu befestigen, aufweist, wobei der Sockel (1) eine Höheneinstelleinrichtung (6) aufweist, damit der Sockel (1) direkt auf einer beweglichen Plattform (5) oder auf der Folie (4) aus Prepreg-Material, die auf der beweglichen Plattform (5) angeordnet ist, auflagert, und
- ein Lasermodul (7), das konfiguriert ist, um einen Abstand zwischen dem Lasermodul (7) und der Reflexionsplatte (8) zu messen;
**dadurch gekennzeichnet, dass** die Vorrichtung eine zentrale Verarbeitungseinheit aufweist, die konfiguriert ist, um die Verarbeitungsschritte des Messverfahrens nach einem der vorhergehenden Ansprüche durchzuführen.

5. Vorrichtung zur Messung des Fasergehalts der Folie (4) aus Prepreg-Material nach Anspruch 4, wobei die Höheneinstelleinrichtung (6) wenigstens eine mit dem Sockel (1) verbunden Rolle (6) ist.

6. Vorrichtung zur Messung des Fasergehalts der Folie (4) aus Prepreg-Material nach Anspruch 4 oder 5, wobei die Vorrichtung fortlaufende Zuführungseinrichtungen zum fortlaufenden Zuführen der Folie (4) aus Prepreg-Material aufweist.

7. Vorrichtung zur Messung des Fasergehalts der Folie (4) aus Prepreg-Material nach dem vorhergehenden Anspruch, die eine Spule (9) zum Zuführen einer Faserfolie (4.1) vor dem Aufbringen von Harz für die Ausbildung der Folie (4) aus Prepreg-Material aufweist, die ein zusätzliches Lasermodul (10) aufweist, um die Dicke der Faserfolie (4.1) zu messen, um die Art des Gewebes, das in der Datenbank korreliert werden soll, zu bestimmen.

8. Vorrichtung zur Messung des Fasergehalts der Folie (4) aus Prepreg-Material nach dem vorhergehenden Anspruch, die Sammeleinrichtungen in der Form einer Spule (3) für die Lagerung der Folie (4) aus Prepreg-Material aufweist.

9. Vorrichtung zur Messung des Fasergehalts der Folie (4) aus Prepreg-Material nach einem der Ansprüche 4 bis 6, wobei das Lasermodul (7) und/oder das zusätzliche Lasermodul (10) auf der Vertikalen der Reflexionsplatte (8) angeordnet ist/sind.

## Revendications

1. Procédé de mesure de la teneur en fibres d'une feuille (4) de matériau préimprégné, dans lequel la feuille (4) de matériau préimprégné est formée par une feuille de fibres (4.1) imprégnée dans une matrice résineuse et la feuille (4) de matériau préimprégné laisse passer une lumière laser émise à partir d'un module laser (7), le procédé comprenant :
- la mesure d'une épaisseur de la feuille (4) de matériau préimprégné ;
- la mise en corrélation de la mesure de l'épaisseur de la feuille (4) de matériau préimprégné avec une base de données comprenant des valeurs de teneur en fibres en fonction de l'épaisseur ou d'une plage d'épaisseurs de la feuille (4) de matériau préimprégné et en fonction des matériaux qui constituent la feuille (4) de matériau préimprégné, et ;
- le fait de déterminer la teneur en fibres de la feuille (4) de matériau préimprégné comme étant la valeur issue de la base de données correspondant à une feuille (4) constituée des mêmes matériaux que la feuille (4) de matériau préimprégné dont l'épaisseur a été mesurée, et avec une épaisseur ou une plage d'épaisseurs comprenant l'épaisseur mesurée de la feuille (4) de matériau préimprégné ;
dans lequel la mesure de l'épaisseur de la feuille (4) comprend :
- la mesure d'une première distance existant entre le module laser (7) et une plaque de réflexion (8) qui repose sur une plateforme (5) ;
- l'agencement de la feuille (4) de matériau préimprégné entre la plaque de réflexion (8) et la plateforme (5) ;
- la mesure d'au moins une seconde distance entre le module laser (7) et la plaque de réflexion (8), dans lequel la plaque de réflexion (8) repose sur la feuille (4) de matériau préimprégné agencée sur la plateforme (5) ; et
- le fait de déterminer l'épaisseur de la feuille (4) de matériau préimprégné comme étant la différence entre la première distance mesurée et au moins une parmi la seconde distance mesurée.

2. Procédé de mesure de la teneur en fibres de la feuille (4) de matériau préimprégné selon la revendication 1, dans lequel la base de données est obtenue, pour chaque sélection d'un matériau de feuille de fibres (4.1) particulier et d'une résine particulière, au moyen des étapes suivantes :
- la mesure d'un poids correspondant à une première surface d'un matériau de feuille de fibres (4.1) non préimprégné ;
- l'obtention d'une pluralité de feuilles (4) de matériau préimprégné, chaque feuille (4) de matériau préimprégné correspondant à ladite première surface d'un matériau de feuille de fibres (4.1) non préimprégné préimprégnée d'une certaine quantité de résine ;
- la mesure d'un poids de chacune de la pluralité de feuilles (4) de matériau préimprégné ;
- l'obtention de la teneur en fibres de chacune de la pluralité de feuilles (4) de matériau préimprégné, au moyen de la différence de poids entre le matériau de feuille de fibres (4.1) non préimprégné et la feuille (4) de matériau préimprégné respective ;
- la mesure de l'épaisseur de chacune de la pluralité de feuilles (4) de matériau préimprégné, et ;
- le calcul pour chacune de la pluralité de feuilles (4) de matériau préimprégné de la moyenne et de l'écart des données d'épaisseur mesurée, et l'établissement d'un lien entre l'épaisseur des feuilles (4) de matériau préimprégné et la teneur en fibres de celles-ci.

3. Procédé pour mesurer la teneur en fibres d'une feuille (4) de matériau préimprégné selon l'une quelconque des revendications précédentes, comprenant la mesure de l'épaisseur de la feuille de fibres (4.1) avant la mesure de l'épaisseur de la feuille (4) de matériau préimprégné pour déterminer le type de tissu devant être mis en corrélation dans la base de données.

4. Dispositif pour mesurer la teneur en fibres d'une feuille (4) de matériau préimprégné comprenant :
- une base (1) comprenant une plaque de réflexion (8) montée sur la base (1) et un cadre (2) configuré pour fixer la base (1) à un point fixe, dans lequel la base (1) comprend des moyens de réglage de hauteur (6) afin que la base (1) repose directement sur une plateforme mobile (5) ou sur la feuille (4) de matériau préimprégné agencée sur la plateforme mobile (5), et ;
- un module laser (7) configuré pour mesurer une distance entre ledit module laser (7) et la plaque de réflexion (8) ;
**caractérisé en ce que** le dispositif comprend une unité centrale de traitement configurée pour réaliser les étapes de traitement du procédé de mesure selon l'une quelconque des revendications précédentes.

5. Dispositif pour mesurer la teneur en fibres de la feuille (4) de matériau préimprégné selon la revendication 4, dans lequel les moyens de réglage de hauteur (6) sont au moins un rouleau (6) relié à la base (1).

6. Dispositif pour mesurer la teneur en fibres de la feuille (4) de matériau préimprégné selon la revendication 4 ou 5, dans lequel le dispositif comprend des moyens d'apport continu pour apporter de façon continue la feuille (4) de matériau préimprégné.

7. Dispositif pour mesurer la teneur en fibres de la feuille (4) de matériau préimprégné selon la revendication précédente, comprenant une bobine (9) pour apporter une feuille de fibres (4.1) avant l'application d'une résine pour la formation de la feuille (4) de matériau préimprégné, comprenant un module laser supplémentaire (10) pour mesurer l'épaisseur de la feuille de fibres (4.1) pour déterminer le type de tissu devant être mis en corrélation dans la base de données.

8. Dispositif pour mesurer la teneur en fibres de la feuille (4) de matériau préimprégné selon la revendication précédente, comprenant des moyens de collecte sous la forme d'une bobine (3) pour un stockage de la feuille (4) de matériau préimprégné.

9. Dispositif pour mesurer la teneur en fibres de la feuille (4) de matériau préimprégné selon l'une quelconque des revendications 4 à 6, dans lequel le module laser (7) et/ou le module laser supplémentaire (10) sont agencés sur la verticale de la plaque de réflexion (8).
